# NEUE EUROPÄISCHE PATENTSCHRIFT

(11) **EP 1 231 130 B2**
(45) Veröffentlichungstag und Bekanntmachung des Hinweises auf die Entscheidung über den Einspruch: **24.10.2007**
(45) Hinweis auf die Patenterteilung: 19.11.2003
(21) Anmeldenummer: 02002498.0
(22) Anmeldetag: 02.02.2002
(51) Int. Cl.: B62D 25/04

(54) **Mittelsäule einer Kraftfahrzeugkarosserie**
Central pillar of a motor vehicle body
Colonne centrale d'une carrosserie de véhicule automobile

(30) Priorität: 10.02.2001 DE 10106149
(43) Veröffentlichungstag der Anmeldung: 14.08.2002
(73) Patentinhaber: Bayerische Motoren Werke Aktiengesellschaft, 80809 München (DE)
(72) Erfinder: Li Pira, Santo, 80809 München (DE); Dietrich, Rainer, 85778 Haimhausen (DE); Gruber, Oskar, 85748 Garching (DE)

(56) Entgegenhaltungen:
- EP-A- 1 170 197
- DE-A- 4 018 593
- DE-A- 4 120 223
- DE-A- 4 139 303
- DE-A- 19 948 363
- DE-A1- 10 018 898
- DE-C2- 3 540 814

## Beschreibung

Die Erfindung betrifft ein Verfahren zum Herstellen einen Mittelsäule einen Kraftfahrzeugkarosserie, sowie eine damit hergestellte Mittelsäule.

Aus der deutschen Patentanmeldung 100 32 971.3 ist eine Mittelsäule aus zwei Säutenabschnitten aus Blechpressteilen bekannt, die unter Bildung einer Überlappung im Bereich einer Türlagerung miteinander verbunden sind.

Die DE 41 39 303 A1 beschreibt eine Mittelsäule (B-Pfosten) an einer Karosserie eines Personenkraftwagens, die zumindest teilweise aus einem Strangpressprofil und / oder Gussteil aus Leichtmetall besteht.

Aus der DE 41 20 223 A1 ist eine Rahmenstruktur für Fahrzeuge bekannt, die aus Hohlprofilen und Knotenelementen gebildet wird. Zwei beabstandete Knotenelemente werden durch ein Hohlprofil, das aus zwei ineinander verschiebbaren Rohrteilen gebildet wird, miteinander verbunden. In der konstruktiven Endlage werden dann die ineinander verschiebbaren Rohrteile fest zueinander verklebt.

Ferner ist aus der DE 100 18 898 A1 bereits ein Kraftwagen mit einen Mittelsäule bekannt, die passgenau in eine Säulenaufnahme einsteckbar ist, die von einem Strangpressprofil gebildet ist.

Aufgabe der Erfindung ist es, eine Mittelsäule einer Kraftfahrzeugkarosserie zu schaffen, die einen Toleranzausgleich in der Länge ermöglicht und mit den im Rohbau gängigen Methoden gefertigt werden kann.

Diese Aufgabe wird durch die Merkmale des Patentanspruchs 1 gelöst.

Die erfindungsgemäße Mittelsäule wird aus mindestens zwei Bauteilen aus Strangpressprofilen gebildet. Zumindest zwei dieser Bauteile sind mit Führungsflächen ausgestattet, so dass sie teleskopartig ineinander steckbar sind. Diese Steckverbindung ist mit einer Schweißverbindung gesichert. Zur Montage der Mittelsäule werden die beiden Bauteile zumindest teilweise teleskopartig ineinander geschoben und mit ihren freien Enden an der Rohkarosserie befestigt. Dabei ist ein Toleranzausgleich in Längsrichtung der Mittelsäule gut möglich, da die beiden Bauteile noch nicht fest miteinander verbunden sind. Erst wenn die Mittelsäule an die Rohkarosserie angebunden ist, werden die beiden Bauteile miteinander im Bereich der teleskopartigen Steckverbindung fest verschweißt, sodass sie sich nicht mehr zueinander verlagern können. Zur Produktion einer solchen Mittelsäule sind normale Strangpress- und Biegewerkzeuge ausreichend, es werden keine teuren Blechumformwerkzeuge benötigt. Dies spart hohe Investkosten. Für die Strangpressprofile gibt es so gut wie keine Einschränkungen in der Gestaltung des Querschnitts, außer dass die Bauteile teleskopartig ineinander schiebbar sein müssen. Es können also auch sehr einfache und damit preiswerte Profilquerschnitte verwendet werden.

Im heutigen Automobilbau spielt eine leichte Fahrzeugkarosserie zur Reduzierung des Kraftstoffverbrauchs und zur Steigerung der Fahrdynamik eine große Rolle. Einen Beitrag zum Leichtbau leistet dabei der Einsatz von Leichtmetallen anstelle von schweren Eisenmetallen. Daher sind die Bauteile idealerweise aus Leichtmetall, wie beispielsweise Aluminium.

Im Bereich der verschweißten, teleskopartigen Steckverbindung ist die Mittelsäule besonders steif, da dieser Bereich aus den zwei ineinander geschobenen Bauteilen besteht, während die restliche Mittelsäule nur durch ein Bauteil gebildet ist. Dieser besonders steife Bereich ist optimal geeignet zur Einleitung von Kräften in die Mittelsäule. Daher sollten Türscharniere und / oder Türschlösser vorteilhafterweise in diesem Bereich angebracht werden.

Im Falle eines Seitencrashs werden häufig die Türen und die Mittelsäule besonders stark beschädigt. Bei der Auslegung der Karosserie ist es ein Ziel, dass die Bodenbaugruppe der Karosserie bei einem Seitenaufprall, an der die Mittelsäule unten angebracht ist, möglichst unversehrt bleibt. Denn eine beschädigte Bodenbaugruppe ist meist irreparabel, während die Mittelsäule mit vertretbarem Aufwand austauschbar ist. Um eine dafür optimale Verformung der Karosserie bei einem Seitencrash zu gewährleisten, weist die Mittelsäule günstigerweise oberhalb der teleskopartigen Steckverbindung eine Sollbruchstelle auf. Dadurch knickt oder bricht die Mittelsäule bei einem Seitenaufprall kontrolliert an der Sollbruchstelle auseinander, wenn die Aufprallenergie so groß ist, dass ansonsten die Bodenbaugruppe verformt werden würde.

In die erfindungsgemäße Mittelsäule werden idealerweise noch zusätzliche Funktionen integriert. Beispielsweise lassen sich gut Halter für Gurte oder für Sensoren in ein Strangpressprofil mit einarbeiten. Auch ein Luftkanal lässt sich gut in die Mittelsäule integrieren. Durch eine derartige Einbindung weiterer Funktionen in die Mittelsäule kann die Anzahl zusätzlich erforderlicher Bauteile reduziert werden.

Die teleskopartige Verbindung zwischen den Bauteilen kann vorteilhafterweise wie eine Schwalbenschwanz-Führung gestaltet sein. Alternativ eignet sich für die Verbindung auch gut das Prinzip eines Nutensteins in einer T-Nut. Diese beiden gängigen und einfachen Führungen ermöglichen eine preiswerte Realisierung einer teleskopartigen Verbindung.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig.** 1: eine räumliche Ansicht einer Mittelsäule,
- **Fig.** 2: eine räumliche Ansicht der Mittelsäule von **Fig.** 1 mit einem integrierten Luftkanal und
- **Fig.** 3: einen Schnitt durch die Mittelsäule von **Fig.** 2.

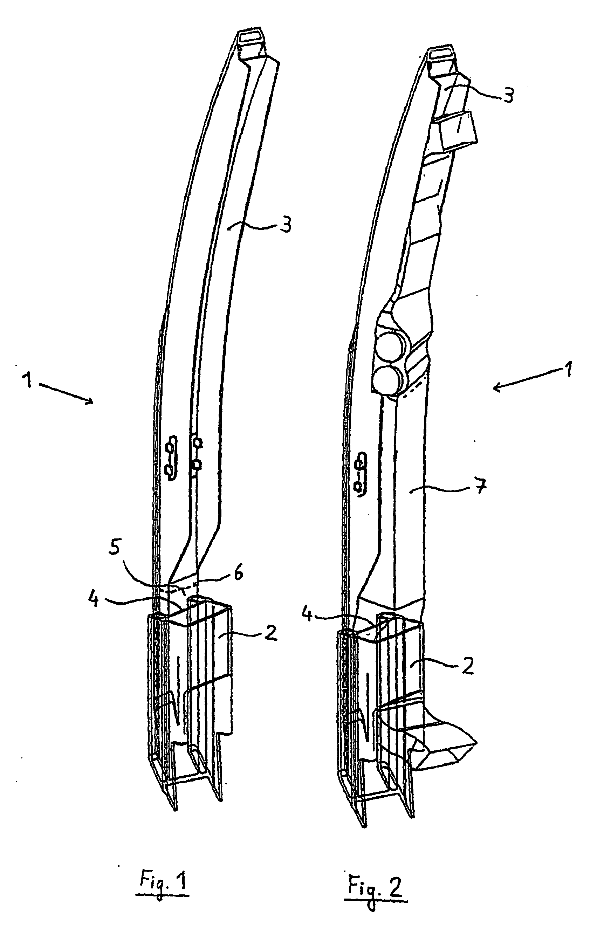

**Fig.** 1 zeigt eine Mittelsäule 1 einer nicht dargestellten Fahrzeugkarosserie. Die Mittelsäule 1 besteht aus zwei gebogenen und befrästen Bauteilen 2, 3 aus Strangpressprofilen aus Aluminium. Das untere Bauteil 2 bildet dabei den Säulenfuss und erstreckt sich nur in etwa über das untere Viertel der Mittelsäule 1. Eine Seite des Säulenfusses 2 hat im Querschnitt die Form eines nach außen offenen "U"s. Dabei sind die beiden äußeren Enden des "U"s jeweils leicht zur Mitte hin gebogen, so dass sie eine Art Schwalbenschwanzführung 4 bilden.

Das obere Bauteil 3 erstreckt sich fast über die ganze Länge der Mittelsäule 1. Etwa im unteren Drittel ist das obere Bauteil 3 so befräst, dass das verbleibende Strangpressprofil eine Art Schwalbenschwanz 5 bildet. Dieser schwalbenschwanzförmige Abschnitt 5 ist wie ein Teleskop formschlüssig in die schwalbenschwanzartige Führung des Säulenfusses 2 in Längsrichtung eingeschoben.

Im Rohbau wird zuerst das obere Ende des oberen Bauteils 3 am oberen Dachseitenrahmen und der Säulenfuss 2 am Seitenschweller angeschweißt. Dabei ist die ganze Zeit über das obere Bauteil 3 im Säulenfuss 2 in Längsrichtung verschiebbar. So kann die Mittelsäule 1 leicht den Toleranzen der sonstigen Rohkarosserie angepasst werden. Erst danach werden die beiden Bauteile 2, 3 im Bereich ihrer teleskopartigen Steckverbindung fest miteinander verschweißt.

Aufgrund der Befräsung des oberen Bauteils 3 weist die Mittelsäule 1 knapp oberhalb des Säulenfusses 2 eine Sollbruchstelle 6 auf. Bei einem Seitencrash knickt die Mittelsäule 1 zuerst an dieser Sollbruchstelle 6 ein und verhindert so größtenteils irreparable Schäden am Unterbau.

Wie in **Fig.** 2 dargestellt kann in eine solche Mittelsäule 1 auf einfache Weise ein Luftkanal 7 integriert werden. Auch Halterungen für Sensoren oder einen Sicherheitsgurt lassen sich leicht bei der Bearbeitung der Strangpressprofile 2, 3 nach der Extrusion und dem Biegen einbringen.

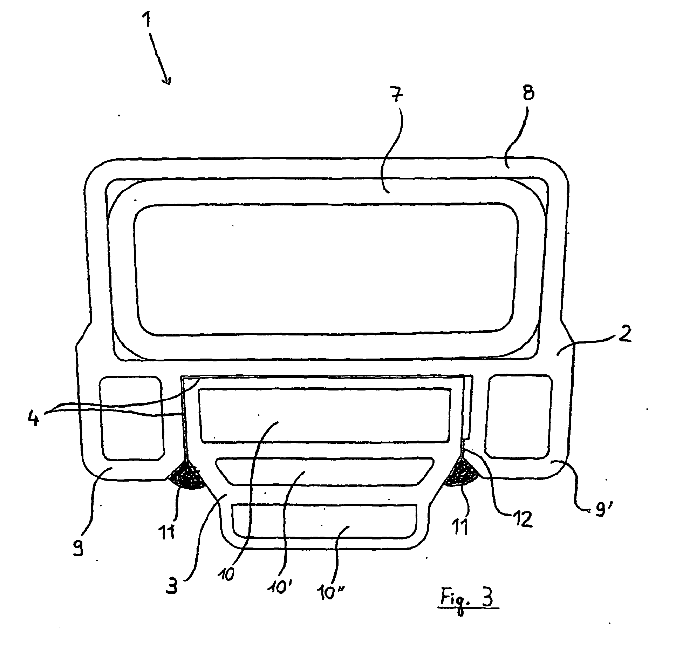

**Fig.** 3. zeigt einen Schnitt durch die Mittelsäule 1 von **Fig.** 2 im Bereich der teleskopartigen Steckverbindung. Der Säulenfuss 2 besteht im Querschnitt aus einem großen Hohlprofil 8 und zwei einstückig damit ausgebrachten kleineren seitlichen Hohlprofilen 9, 9'. Zwischen den beiden seitlichen Hohlprofilen 9, 9' befindet sich die schwalbenschwanzförmige Führung 4. In diese Führung 4 ist das obere Bauteil 3 eingeschoben, das drei parallele Hohlräume 10, 10', 10" umschließt. Zwei Schweißnähte 11 zwischen dem oberen Bauteil 3 und den beiden seitlichen Hohlprofilen 9, 9' des Säulenfusses 2 verbinden die beiden Bauteile 2, 3 im Bereich der teleskopartigen Steckverbindung fest miteinander. In das große Hohlprofil 8 des Säulenfusses 2 ist der Luftkanal 7 eingeschoben. Auf der dem oberen Bauteil 3 zugewandten Seite des rechten seitlichen Hohlprofils 9' des Säulenfusses 2 ist eine kleine Rippe 12 anextrudiert. Diese Rippe 12 ist nach der Extrusion zunächst so groß, dass das obere Bauteil 3 nicht in die Führung 4 eingeschoben werden kann. Erst beim Befräsen des Säulenfusses 2 vor dem Verbau als Mittelsäule 1 wird die Rippe 12 auf Sollmaß abgefräst. Dadurch können Fertigungstoleranzen der Bauteile 2, 3 zueinander ausgeglichen werden.

## Patentansprüche

1. Verfahren zum Herstellen einer Mittelsäule einer Kraftfahrzeugkarosserie, die aus mindestens zwei Bauteilen (2,3) aus Strangpressprofilen besteht, die mit Führungsflächen derart ausgestattet sind, dass sie teleskopartig ineinander steckbar sind, wobei zuerst die freien Enden der Bauteile (2, 3) der Mittelsäule (1) an einer Rohkarosserie, insbesondere am Dachseitenrahmen und am Seitenschweller, befestigt werden, und erst danach die Bauteile (2, 3) im Bereich ihrer teleskopartigen Steckverbindung mit einer Schweißverbindung (11) fest miteinander verschweißt werden.

2. Mittelsäule, die nach dem Verfahren nach Anspruch 1 hergestellt ist, **dadurch gekennzeichnet, dass** die Bauteile (2, 3) aus Leichtmetall, insbesondere aus Aluminium, sind.

3. Mittelsäule nach Anspruch 2 oder Mittelsäule, die nach dem Verfahren nach Anspruch 1 hergestellt ist, **dadurch gekennzeichnet, dass** im Bereich der verschweißten, teleskopartigen Steckverbindung Türscharniere und/oder Türschlösser angebunden sind.

4. Mittelsäule nach Anspruch 2 oder 3 oder Mittelsäule, die nach dem Verfahren nach Anspruch 1 hergestellt ist, **dadurch gekennzeichnet, dass** die Mittelsäule (1) eine Sollbruchstelle (6) aufweist.

5. Mittelsäule nach einem der Ansprüche 2 bis 4 oder Mittelsäule, die nach dem Verfahren nach Anspruch 1 hergestellt ist, **dadurch gekennzeichnet, dass** in die Mittelsäule (1) weitere Funktionen, insbesondere ein Luftkanal (7), integriert sind.

6. Mittelsäule nach einem der Ansprüche 2 bis 5 oder Mittelsäule, die nach dem Verfahren nach Anspruch 1 hergestellt ist, **dadurch gekennzeichnet, dass** die teleskopartige Steckverbindung nach dem Prinzip eines Nutensteins in einer T-Nut gebaut ist.

7. Mittelsäule nach einem der Ansprüche 2 bis 5 oder Mittelsäule, die nach dem Verfahren nach Anspruch 1 hergestellt ist, **dadurch gekennzeichnet, dass** die teleskopartige Steckverbindung wie eine Schwalbenschwanz-Führung (4) gebaut ist.

## Claims

1. A method of producing a central column of a vehicle body, comprising at least two components (2,3) in the form of extruded profiles provided with guide surfaces such that they can be telescopically inserted in one another, wherein the free ends of the components (2,3) of the central column (1) are first secured to a carcass, especially to the roof side frame and to the side sill, and only afterwards the components (2, 3) are firmly joined by a weld (11) at the telescopic push-fit connection.

2. A central column made by the method according to claim 1, **characterised in that** the components (2, 3) are of light metal, especially aluminium.

3. A central column according to claim 2 or a central column made by the method according to claim 1, **characterised in that** door hinges and/or door locks are disposed in the region of the welded telescopic push-fit connection.

4. A central column according to claim 2 or claim 3 or a central column made by the method according to claim 1, **characterised in that** the central column (1) has a set breaking place (6).

5. A central column according to any of claims 2 to 4 or a central column made by the method in claim 1, **characterised in that** additional parts, especially an air duct (7), are incorporated in the central column (1).

6. A central column according to any of claims 2 to 5 or a central column made by the method in claim 1, **characterised in that** the telescopic push-fit connection is constructed on the principle of a sliding block in a T-groove.

7. A central column according to any of claims 2 to 5 or a central column made by the method according to claim 1, **characterised in that** the telescopic plug-fit connection is constructed as a dovetail guide (4).

## Revendications

1. Procédé de fabrication d'une colonne centrale d'une carrosserie de véhicule automobile, composée d'au moins deux éléments (2, 3) tirés de profilés filés à la presse, et pourvus de surfaces de guidage de telle manière qu'ils puissent être emmanchés télescopiquement l'un dans l'autre et cette liaison à emmanchement est bloquée par une liaison soudée (11),
dans laquelle
tout d'abord on fixe, les extrémités libres des éléments (2, 3) de la colonne centrale (1) sur une carrosserie brute, en particulier à un cadre latéral de pavillon et au bas de marche, et on assemble seulement après les éléments (2, 3) rigidement l'un à l'autre, par soudage d'une liaison soudée (11) dans la région de leur liaison à emmanchement télescopique.

2. Colonne centrale fabriquée selon le procédé de la revendication 1,
**caractérisée en ce que**
les éléments (2, 3) sont en métal léger, en particulier en aluminium.

3. Colonne centrale selon la revendication 2 ou fabriquée selon le procédé de la revendication 1,
**caractérisée en ce que**
des charnières de portes et/ou serrures de portes sont montées dans la région de la liaison à emmanchement télescopique soudée.

4. Colonne centrale selon la revendication 2 ou 3 ou fabriquée selon le procédé de la revendication 1,
**caractérisée en ce que**
la colonne centrale (1) présente une zone d'amorce de rupture (6).

5. Colonne centrale selon l'une des revendications 2 à 4 ou fabriquée selon le procédé de la revendication 1,
**caractérisée en ce que**
des fonctions additionnelles, en particulier un conduit d'air (7) sont intégrées dans la colonne centrale (1).

6. Colonne centrale selon l'une des revendication 2 à 5 ou fabriquée selon le procédé de la revendication 1,
**caractérisée en ce que**
la liaison à emmanchement télescopique est construite sur le principe d'un coulisseau dans une rainure en T.

7. Colonne centrale selon l'une des revendications 2 à 26 ou fabriqué selon le procédé de la revendication 1,
**caractérisée en ce que**
la liaison à emmanchement télescopique est construite à la façon d'un guide à queue d'aronde (4).
